(19)

Europäisches Patentamt
European Patent Office
Office européen des brevets

(11) **EP 4 374 991 A1**

(12) **EUROPEAN PATENT APPLICATION**

(43) Date of publication:
**29.05.2024 Bulletin 2024/22**

(21) Application number: **23209045.6**

(22) Date of filing: **10.11.2023**

(51) International Patent Classification (IPC):
*B22F 10/25* (2021.01)    *B22F 10/38* (2021.01)
*B22F 12/90* (2021.01)    *B23K 26/02* (2014.01)
*B23K 26/08* (2014.01)    *B23K 26/144* (2014.01)
*B23K 26/342* (2014.01)    *B33Y 30/00* (2015.01)
*B33Y 50/02* (2015.01)

(52) Cooperative Patent Classification (CPC):
**B33Y 50/02; B22F 10/25; B22F 10/38; B22F 12/90;**
**B23K 26/02; B23K 26/08; B23K 26/144;**
**B23K 26/342; B33Y 30/00**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **22.11.2022 US 202217991865**

(71) Applicants:
• **Intelligent Manufacturing Systems International**
**San Francisco, CA 94108 (US)**
• **DMG Mori Co., Ltd.**
**Yamatokoriyama-shi, Nara 639-1160 (JP)**

(72) Inventors:
• **Aoyama, Hideki**
**Yokohama-shi, Kanagawa 223-8522 (JP)**
• **Yamazaki, Kazuo**
**San Francisco, CA 94108 (US)**
• **Okamoto, Erika**
**Yokohama-shi, Kanagawa 223-8522 (JP)**
• **Ueda, Masahiro**
**Yamatokoriyama-shi, Nara 639-1160 (JP)**

(74) Representative: **Grünecker Patent- und**
**Rechtsanwälte**
**PartG mbB**
**Leopoldstraße 4**
**80802 München (DE)**

(54) **ADDITIVE PROCESSING DEVICE, ADDITIVE PROCESSING DEVICE CONTROL METHOD, AND COMPUTER-READABLE RECORDING MEDIUM STORING ADDITIVE PROCESSING DEVICE CONTROL PROGRAM**

(57)    There is provided an additive processing device that models a workpiece by melting a supplied powder material and forming layers of the melted powder material. The additive processing device includes a laser head configured to supply the powder material to the workpiece and irradiate the workpiece with a laser beam, a drive unit configured to drive the laser head, a recognition unit configured to recognize a height of the workpiece in a laminating direction at a plurality of locations while the laser head is forming a predetermined N-th layer (N being a natural number) of the workpiece, an estimation unit configured to estimate a surface shape of the N-th layer of the workpiece based on the recognized heights at the plurality of locations, and a control unit configured to control the laser head and the drive unit. The control unit is configured to recognize, based on the estimated surface shape, a low location at which the height of the workpiece in the laminating direction is lower than at another location, and set a stacking amount higher at the low location than at the other location in modeling of a N+l-th layer.

FIG.1

## Description

BACKGROUND

Technological Field

The present disclosure relates to an additive processing device, an additive processing device control method, and a computer-readable recording medium storing an additive processing device control program.

Description of the Related Art

In recent years, additive processing devices that are capable of modeling a workpiece (modeled object) by melting a supplied powder material and forming layers of the melted powder material have become prevalent. This type of modeling is called DED (Directed Energy Deposition). A DED type of additive processing device includes a laser head. While moving, the laser head ejects a powder material onto the workpiece and also irradiates the workpiece with a laser beam. Accordingly, the portion of the workpiece irradiated with the laser beam melts. When the powder material is supplied to the melted portion, the powder material melts and solidifies, thus forming a layer on the workpiece.

When additive processing for one layer ends, it is preferable that the laser head is driven in the laminating direction by an amount corresponding to the thickness of the layer that was formed. If error arises between the actual height of the layer and the amount that the laser head moves at this time, such error accumulates every time a layer is formed. As this error increases, the focal position of the laser beam shifts farther away from the surface of the workpiece, and as a result, the modeling accuracy decreases.

There is a method of correcting the above-described error based on the height of the workpiece actually recognized by a sensor. As one example of such a method, JP 2018-8403A published in Japan discloses a three-dimensional object manufacturing device that has a modeling speed priority mode and a modeling accuracy priority mode. In the modeling speed priority mode, this three-dimensional object manufacturing device recognizes the height of the workpiece once every five layers. On the other hand, in the modeling accuracy priority mode, the three-dimensional object manufacturing device recognizes the height of the workpiece for each layer.

The three-dimensional object manufacturing device disclosed in the above document evaluates the modeling accuracy of the workpiece based on the recognized height of the workpiece. In this way, the three-dimensional obj ect manufacturing device merely evaluates the modeling accuracy of the workpiece, and cannot improve the workpiece modeling accuracy. Accordingly, there is demand for technology for achieving an improvement in modeling accuracy over conventional technology, based on the recognized workpiece height.

BRIEF SUMMARY

According to one example of the present disclosure, there is provided an additive processing device that models a workpiece by melting a supplied powder material and forming layers of the melted powder material. The additive processing device includes a laser head configured to supply the powder material to the workpiece and irradiate the workpiece with a laser beam, a drive unit configured to drive the laser head, a recognition unit configured to recognize a height of the workpiece in a laminating direction at a plurality of locations while the laser head is forming a predetermined N-th layer (N being a natural number) of the workpiece, an estimation unit configured to estimate a surface shape of the N-th layer of the workpiece based on the recognized heights at the plurality of locations, and a control unit configured to control the laser head and the drive unit. The control unit is configured to recognize, based on the estimated surface shape, a low location at which the height of the workpiece in the laminating direction is lower than at another location, and set a stacking amount higher at the low location than at the other location in modeling of a N+1-th layer.

According to another example of the present disclosure, there is provided a control method for an additive processing device that models a workpiece by melting a supplied powder material and forming layers of the melted powder material. The additive processing device including a laser head configured to supply the powder material to the workpiece and irradiate the workpiece with a laser beam, and a drive unit configured to drive the laser head. The control method includes the steps of recognizing a height of the workpiece in a laminating direction at a plurality of locations while the laser head is forming a predetermined N-th layer (N being a natural number) of the workpiece, estimating a surface shape of the N-th layer of the workpiece based on the recognized heights at the plurality of locations, and controlling the laser head and the drive unit. The controlling includes recognizing, based on the estimated surface shape, a low location at which the height of the workpiece in the laminating direction is lower than at another location, and setting a stacking amount higher at the low location than at the other location in modeling of a N+1-th layer.

According to another example of the present disclosure, there is provided a computer-readable recording medium storing a control program for an additive processing device that models a workpiece by melting a supplied powder material and forming layers of the melted powder material. The additive processing device including a laser head configured to supply the powder material to the workpiece and irradiate the workpiece with a laser beam, and a drive unit configured to drive the laser head. The control program causes the additive processing device to execute recognizing a height of the workpiece in a laminating direction at a plurality of locations while the laser head is forming a predetermined N-th layer (N being a natural number) of the workpiece, estimating a surface shape of the N-th layer of the workpiece based on the recognized heights at the plurality of locations, and controlling the laser head and the drive unit. The controlling includes recognizing, based on the estimated surface shape, a low location at which the height of the workpiece in the laminating direction is lower than at another location, and setting a stacking amount higher at the low location than at the other location in modeling of a N+1-th layer.

These and other objects, features, aspects and advantages of the present invention will become apparent from the following detailed description of the invention, taken in conjunction with the accompanying drawings.

BRIEF DESCRIPTION OF THE DRAWINGS

FIG. 1 is a diagram showing an example of a device configuration of an additive processing device.
FIG. 2 is a diagram showing an example of a device configuration of an additive processing machine.
FIG. 3 shows a cross-sectional view of a laser head during additive processing.
FIG. 4 is a diagram schematically showing a process of determining a stacking amount of a N+1-th layer based on the surface shape of a N-th layer.
FIG. 5 is a schematic diagram showing an example of a hardware configuration of a control device.
FIG. 6 is a block diagram showing an example of a drive mechanism of the additive processing machine.
FIG. 7 is a diagram showing an example of a hardware configuration of a CNC (Computer Numerical Control) device.
FIG. 8 is a diagram for describing a functional configuration of the additive processing device.
FIG. 9 is a diagram showing an example of a positional relationship between the laser head of the additive processing machine and a workpiece W.
FIG. 10 is a diagram showing an example of an image obtained from a camera.
FIG. 11 is a diagram showing an example of a generated image.
FIG. 12 is a diagram showing a relationship between the distance "d" shown in FIG. 11 and the SOD (Standoff Distance).
FIG. 13 is a diagram for describing a method for generating a drive path for the laser head.
FIG. 14 is a diagram for describing the drive path generation method in more detail.
FIG. 15 is a diagram showing an example of recognition information.
FIG. 16 is a diagram showing an example of locations on the N-th layer where positions have been calculated.
FIG. 17 is a diagram schematically showing a process of adjustment lamination processing.
FIG. 18 is a flowchart showing a flow of modeling processing performed by the additive processing device.
FIG. 19 is a diagram showing a workpiece formed using a related technique.
FIG. 20 is a diagram showing a workpiece formed using a proposed technique.
FIG. 21 is a diagram showing experiment results.

Detailed Description of Embodiments

Hereinafter, each embodiment according to the present invention will be described with reference to the drawings. In the following description, the same parts and constituent elements are denoted by the same reference numerals. Their names and functions are also the same. Therefore, detailed description of these will not be repeated. Note that each embodiment and each modification described below may be selectively combined as appropriate.

<A. Additive processing device 10>

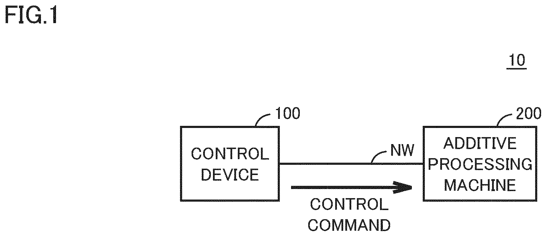

First, the device configuration of an additive processing device 10 will be described below with reference to FIG. 1. FIG. 1 is a diagram showing an example of the device configuration of the additive processing device 10.

As shown in FIG. 1, the additive processing device 10 includes a control device 100 and an additive processing machine 200.

The control device 100 controls the additive processing machine 200 by successively outputting control commands to the additive processing machine 200. The control device 100 is a desktop PC (Personal Computer), a notebook PC, a tablet terminal, or another computer having a communication function, for example.

The additive processing machine 200 is, for example, an AM/SM hybrid processing machine capable of performing workpiece additive processing (additive manufacturing (AM) processing) and workpiece subtractive processing (subtractive manufacturing (SM) processing). The SM processing function of the additive processing machine 200 includes at least either a milling function or a turning function that employs a fixing tool, for example. Note that the additive processing machine 200 may be a device that does not have an SM function.

The control device 100 and the additive processing machine 200 are disposed in a factory, for example, and are able to communicate with each other. The control device 100 and the additive processing machine 200 communicate with each other in accordance with a communication standard for industrial communication data exchange, for example. One example of such a communication standard is the international standard OPCUA (Object Linking and Embedding for Process Control Unified Architecture). The additive processing machine 200 performs workpiece additive processing in accordance with control commands from the control device 100.

Note that although FIG. 1 shows an example in which the additive processing device 10 includes one control device 100, the additive processing device 10 may include two or more control devices 100.

Also, although an example has been given in which the control device 100 is disposed in a factory, the control device 100 may be disposed outside a factory.

Also, although FIG. 1 shows an example in which the additive processing device 10 includes one additive processing machine 200, the additive processing device 10 may include two or more additive processing machines 200.

<B. Device configuration of additive processing machine 200>

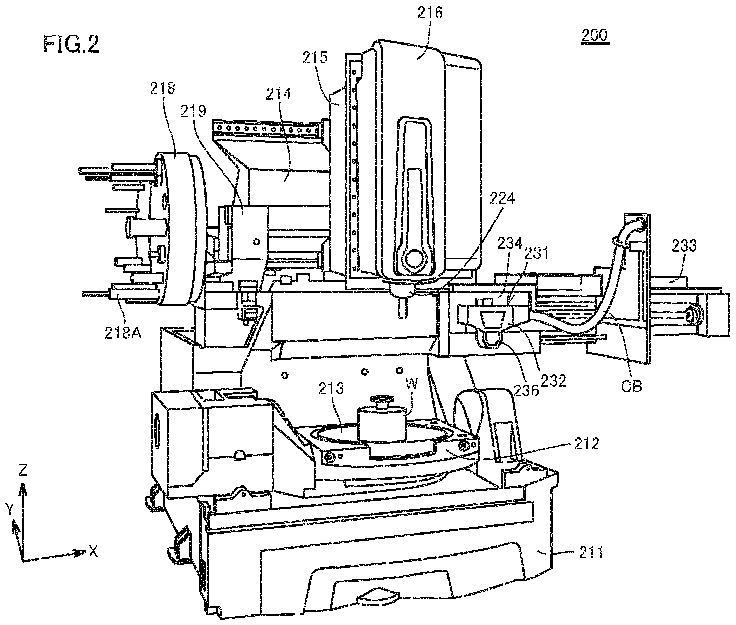

Next, an example of the device configuration of the additive processing machine 200 shown in FIG. 1 will be described with reference to FIG. 2. FIG. 2 is a diagram showing an example of the device configuration of the additive processing machine 200.

For convenience in the description, in the following, one direction on the horizontal plane will be referred to as the "X direction". Also, the direction on the horizontal plane orthogonal to the X direction will referred to as the "Y direction". Moreover, the direction orthogonal to both the X direction and the Y direction (i.e., the direction of gravity) will be referred to as the "Z direction".

The additive processing machine 200 includes a machine bed 211. A turn table 212 is provided on the machine bed 211. The turn table 212 includes a rotary table 213. The rotary table 213 is rotatably attached to the turn table 212. A workpiece W to be subjected to additive processing is clamped on the rotary table 213.

As one example, the additive processing machine 200 has two axes of control with respect to the rotation of the workpiece W clamped on the rotary table 213, namely a turn axis and a rotation axis. The turn axis is an axis parallel to the upper surface of the machine bed 211. The rotation axis is an axis orthogonal to the upper surface of the turn table 212. The rotary table 213 is rotatable around the turn axis and also around the rotation axis.

The additive processing machine 200 includes a first slide mechanism 214. The first slide mechanism 214 is located in a machine column behind the machine bed 211. The first slide mechanism 214 is movable in the Y direction along a slide guide attached to the machine column.

A plurality of slide guides aligned with the X direction are arranged in the first slide mechanism 214. A second slide mechanism 215 is movable in the X direction along the slide guides.

The second slide mechanism 215 includes a subtractive processing head 216. The subtractive processing head 216 is drivable in the Z direction along the second slide mechanism 215. By controlling the driving of the first slide mechanism 214 in the Y direction, controlling the driving of the second slide mechanism 215 in the X direction, and controlling the driving of the subtractive processing head 216 in the Z direction, the additive processing machine 200 drives the subtractive processing head 216 to any position in the X direction, the Y direction, and the Z direction. Such driving is performed using servo motors, for example.

The additive processing machine 200 includes a magazine 218 for storing various units such as a tool 218A, and an automatic tool changer (ATC) 219. The tool 218A is stored in the magazine 218 when not in use. In accordance with the acceptance of a tool change instruction, the automatic tool changer 219 withdraws the unit that is to be mounted from the magazine 218, and mounts the withdrawn unit to a spindle 224.

The additive processing machine 200 further includes a laser head 231 for performing DED additive processing. The laser head 231 supplies a powder material to the workpiece W that is being subjected to additive processing, and irradiates the workpiece surface with a laser beam. The powder material may be a metal powder, a resin powder, or another type of powder that can be melted by the laser beam.

The laser head 231 includes a head body 232 and a laser nozzle 236. The powder material is supplied to the head body 232 via a cable CB. The laser nozzle 236 irradiates the workpiece with the laser beam, and also determines an irradiation region on the workpiece that is to be irradiated with the laser beam. The powder material supplied to the laser head 231 passes through the laser nozzle 236 and is discharged toward the workpiece W.

The laser head 231 is provided on a third slide mechanism 234. The third slide mechanism 234 is provided on a slide guide 233 and is drivable in the X direction. The laser head 231 is driven to an arbitrary position in the X direction in conjunction with the driving of the third slide mechanism 234. When additive processing is to be performed, the laser head 231 is driven so as to be located below the spindle 224, and is attached to the spindle 224. Upon being mounted to the spindle 224, the laser head 231 can be driven in the X direction, the Y direction, and the Z direction in conjunction with the subtractive processing head 216.

<C. Laser head 231>

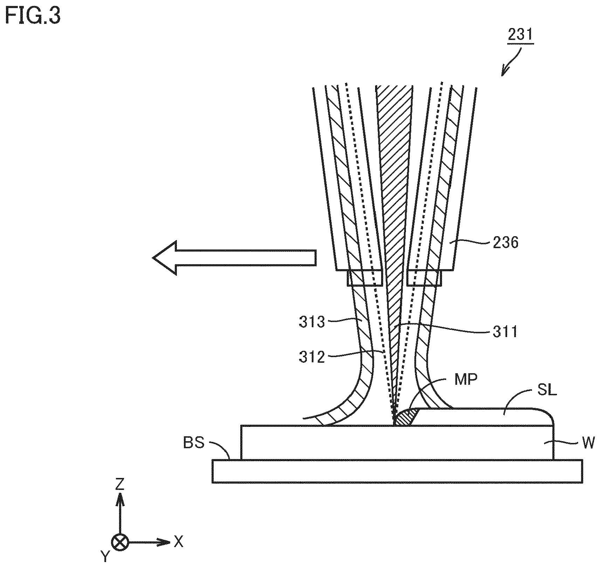

Next, additive processing performed using the laser head 231 will be described with reference to FIG. 3. FIG. 3 shows a cross-sectional view of the laser head 231 during additive processing.

In FIG. 3, the workpiece W being subjected to additive processing is shown on a base surface BS. The base surface BS represents the surface of an object. For example, the base surface BS may be the surface of a substrate, or the surface of the workpiece being subjected to additive processing.

The laser head 231 irradiates the surface of the workpiece W with a laser beam 311 while moving on the XY plane. As a result, the portion irradiated with the laser beam 311 melts, and a melt pool MP is formed on the surface of the workpiece W. In parallel with this, the laser head 231 supplies a powder material 312 to the melt pool MP. The powder material 312 is guided to the melt pool MP by a gas 313 discharged from the laser head 231. As a result, the powder material 312 melts and liquefies in the melt pool MP. Thereafter, the melt pool MP solidifies to form a layer SL on the workpiece W. Note that the gas 313 also functions as a shield gas and prevents oxidation of the workpiece W, which is a laminate.

When the additive processing of the layer SL is complete, the laser head 231 is driven in the laminating direction of the workpiece W. The "laminating direction" corresponds to a direction orthogonal to the layers. In other words, the "laminating direction" corresponds to the direction in which the layers are stacked on one another. The following description is premised on the laminating direction being the Z direction (i.e., the gravity direction), but the laminating direction is not limited to being the Z direction.

By repeatedly performing driving on the XY plane and driving in the Z direction, layers of the powder material 312 are stacked on one another. If the driving amount of the laser head 231 in the Z direction does not match the height of the formed layer SL, the focal position of the laser beam 311 shifts away from the workpiece surface each time a layer is formed. As a result, the modeling accuracy decreases. On the other hand, if the driving amount of the laser head 231 in the Z direction matches the height of the formed layer SL, the focal point of the laser beam 311 is always located on the workpiece surface, and the modeling accuracy does not decrease. For this reason, it is preferable that the distance between the laser head 231 and the workpiece surface is always constant.

<D. Overview>

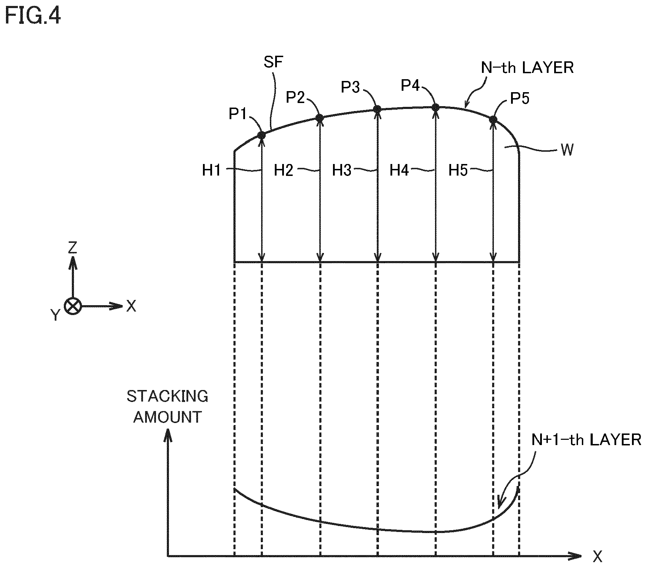

Next, an overview of modeling processing according to the present embodiment will be described with reference to FIG. 4. FIG. 4 is a diagram schematically showing a process of determining a stacking amount of a N+1-th layer based on the surface shape of a N-th layer. Here, "N" is a natural number.

FIG. 4 shows a cross-sectional view of a workpiece W that has been modeled up to the N-th layer. As shown in FIG. 4, the height of the workpiece W in the laminating direction is not necessarily uniform at various locations. In view of this, the additive processing device 10 according to this embodiment recognizes the surface shape of the N-th layer of the workpiece, and determines stacking amounts for various locations in the N+1-th layer in accordance with the recognized surface shape. Accordingly, the additive processing device 10 makes the height of the workpiece W more uniform.

More specifically, while the laser head 231 is forming the N-th layer of the workpiece W, the additive processing device 10 recognizes the height of the workpiece W in the laminating direction (hereinafter, also referred to as the "current workpiece height") at multiple locations. The current workpiece height is the distance between a predetermined reference plane and the upper surface of the N-th layer of the workpiece W, for example. The predetermined reference plane may be the above-mentioned base surface BS or a horizontal plane that includes the powder material discharge port of the laser nozzle 236.

In the example of FIG. 4, the additive processing device 10 recognizes a current workpiece height H1 at a location P1, a current workpiece height H2 at a location P2, a current workpiece height H3 at a location P3, a current workpiece height H4 at a location P4, and a current workpiece height H5 at a location P5.

Next, the additive processing device 10 estimates a surface shape SF of the N-th layer of the workpiece W based on the current workpiece heights H1 to H5 at the aforementioned locations. Although the surface shape SF is shown as a two-dimensional shape in the example shown in FIG. 4, the surface shape SF typically is a three-dimensional shape. The surface shape SF is defined by a coordinate value group including the coordinate values of locations on the N-th layer, for example.

Next, based on the estimated surface shape SF, the additive processing device 10 recognizes a low location at which the height of the workpiece W in the laminating direction is lower than at another location, and sets the stacking amount at that low location higher than at the other location in formation of the N+1-th layer. In other words, the lower the current workpiece height is at a certain location, the additive processing device 10 sets a higher stacking amount in the formation of the N+1-th layer. Accordingly, the additive processing device 10 can make the height of the workpiece W more uniform at the various locations.

Note that although an example of estimating the surface shape SF of the N-th layer based on the current workpiece heights H1 to H5 at five locations is described above, the surface shape SF can be estimated based on the current workpiece heights at two or more locations. For example, in the case where the workpiece W (modeled object) has a two-dimensional shape, such as a wall shape, the surface shape SF can be estimated based on at least the workpiece heights at two locations. As another example, in the case where the workpiece W (modeled object) has a three-dimensional shape, such as a cylindrical shape, the surface shape SF can be estimated based on at least the workpiece heights at three locations.

<E. Hardware Configuration of Control Device 100>

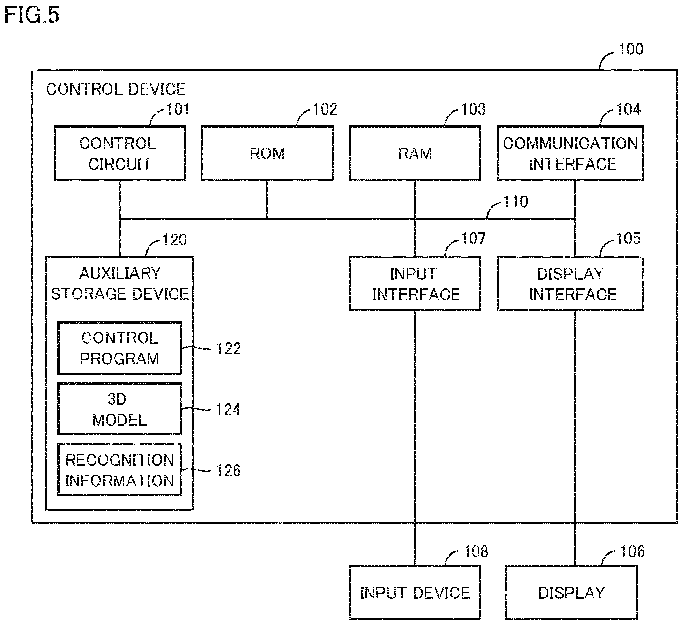

Next, a hardware configuration of control device 100 will be described with FIG. 5. FIG. 5 is a schematic diagram showing an example of hardware configuration of control device 100.

Control device 100 includes a control circuit 101, a ROM (Read Only Memory) 102, a RAM (Random Access Memory) 103, a communication interface 104, a display interface 105, an input interface 107, and an auxiliary storage device 120. These components are connected to a bus 110.

Control circuit 101 is formed of, for example, at least one integrated circuit. The integrated circuit may be formed of, for example, at least one CPU (Central Processing Unit), at least one GPU (Graphics Processing Unit), at least one ASIC (Application Specific Integrated Circuit), at least one FPGA (Field Programmable Gate Array), or a combination thereof.

Control circuit 101 controls the operation of control device 100 by executing various programs such as a control program 122 and an operating system. In response to accepting an instruction to execute control program 122, control circuit 101 reads control program 122 from auxiliary storage device 120 or ROM 102 to RAM 103. RAM 103 functions as a working memory, and temporarily stores various types of data required to execute control program 122.

Communication interface 104 is an interface to realize communication with various devices such as additive processing machine 200. As an example, control unit 100 is connected via communication interface 104 to the above-mentioned network NW (see FIG. 1). As a result, control unit 100 exchanges data with additive processing machine 200.

A display 106 is connected to display interface 105. Display interface 105 issues an image signal for displaying an image to display 106 in accordance with an instruction from control circuit 101 and the like. Display 106 is, for example, a liquid crystal display, an organic EL (Electro Luminescence) display, or another display device. Display 106 may be configured integrally with or separate from control device 100.

An input device 108 is connected to input interface 107. Input device 108 is, for example, a mouse, a keyboard, a touch panel, or another device capable of accepting a user's operation. Input device 108 may be configured integrally with or separate from control device 100.

Auxiliary storage device 120 is a storage medium such as a hard disk or a flash memory. Auxiliary storage device 120 stores control program 122, three-dimensional model 124 expressing a completed shape of the workpiece, recognition information 126 and the like. The storage location of various data stored in auxiliary storage device 120 is not limited to auxiliary storage device 120, and they may be stored in a storage area (for example, a cache memory) of control circuit 101, ROM 102, RAM 103, an external device (for example, additive processing machine 200 or an external server), and the like.

Control program 122 may be provided not as an individual program, but by being incorporated into part of an appropriate program. Even such a program that does not include some of modules does not depart from the gist of control program 122 according to the present embodiment. Moreover, some or all of the functions provided by control program 122 may be implemented by dedicated hardware. Moreover, control device 100 may be configured in the form of so-called cloud service in which at least one server executes part of the process of control program 122.

<F. Drive Mechanism of Additive Processing Machine 200>

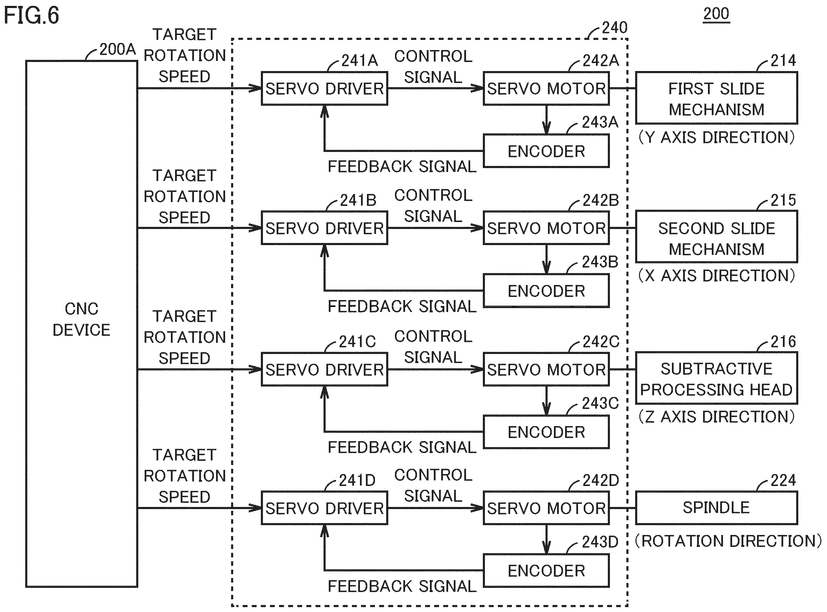

Next, an example hardware configuration of additive processing machine 200 will be described with FIG. 6. FIG. 6 is a block diagram showing an example of the drive mechanism of additive processing machine 200.

Additive processing machine 200 includes CNC device 200A, a drive unit 240, the above-described first slide mechanism 214, the above-described second slide mechanism 215, the above-described subtractive processing head 216, and the above-described spindle 224.

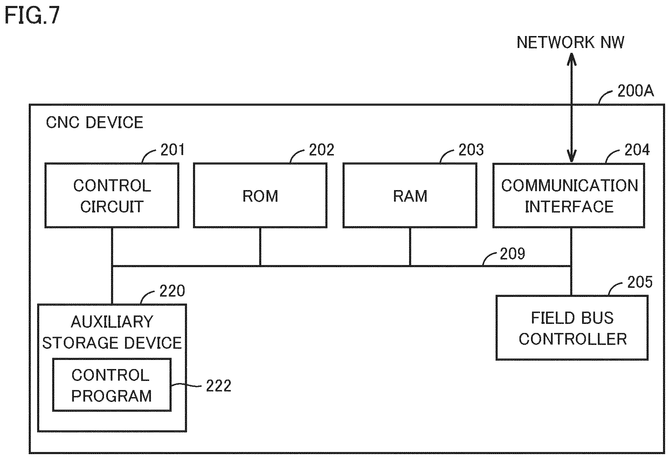

CNC device 200A controls the operation of drive unit 240 by executing various programs, such as control program 222 (see FIG. 7) described below.

Drive unit 240 is a mechanism for driving various mechanisms in additive processing machine 200. The device configuration of drive unit 240 may be in any device configuration. Drive unit 240 may be constituted by a single drive unit or multiple drive units. In the example in FIG.6, drive unit 240 is constituted by servo drivers 241A to 241D, servo motors 242A to 242D, and encoders 243A to 243D.

Servo driver 241A sequentially receives input of a target rotational speed (or a target position) from CNC device 200A, controls servo motor 242A such that servo motor 242A rotates at the target rotational speed, and drives first slide mechanism 214 in a Y-axis direction.

More specifically, servo driver 241A calculates an actual rotational speed (or an actual position) of servo motor 242A based on a feedback signal of encoder 243A, and raises the rotational speed of servo motor 242A when the actual rotational speed is lower than the target rotational speed, and lowers the rotational speed of servo motor 242A when the actual rotational speed is higher than the target rotational speed. In this manner, servo driver 241A brings the rotational speed of servo motor 242A closer to the target rotational speed while sequentially receiving the feedback on the rotational speed of servo motor 242A. Servo driver 241A moves first slide mechanism 214 in the Y-axis direction, to move laser head 231 mounted on spindle 224 to an appropriate position in the Y-axis direction.

With similar motor control of servo driver 241A, servo driver 241B moves, in accordance with a control command from CNC device 200A, second slide mechanism 215 in the X-axis direction, to move laser head 231 mounted on spindle 224 to an appropriate position in the X-axis direction.

With similar motor control of servo driver 241A, servo driver 241C moves, in accordance with a control command from CNC device 200A, subtractive processing head 216 in the Z-axis direction, to move laser head 231 mounted on spindle 224 to an appropriate position in the Z-axis direction.

With similar motor control of servo driver 241A, servo driver 241D controls a rotational speed of spindle 224 in accordance with a control command from CNC device 200A.

The additive processing machine 200 further includes a first drive mechanism (not shown) for driving the above-described rotary table 213 (see FIG. 2) around the turn axis. The turn axis is an axis parallel to the upper surface of the machine bed 211 (see FIG. 2). The first drive mechanism is constituted by, for example, a servo driver, a servo motor, and an encoder, for example. Through motor control similar to that performed by the servo driver 241A, the servo driver controls the rotation angle of the rotary table 213 around the turn axis in accordance with control commands from the CNC device 200A.

The additive processing machine 200 further includes a second drive mechanism (not shown) for driving the above-described rotary table 213 (see FIG. 2) around the rotation axis. The rotation axis is an axis orthogonal to the upper surface of the turn table 212. The second drive mechanism is constituted by, for example, a servo driver, a servo motor, and an encoder, for example. Through motor control similar to that performed by the servo driver 241A, the servo driver controls the rotation angle of the rotary table 213 around the rotation axis in accordance with control commands from the CNC device 200A.

<G. Hardware Configuration of CNC device 200A>

Next, a hardware configuration of CNC device 200A will be described with FIG. 7. FIG. 7 is a diagram showing an example of hardware configuration of CNC device 200A.

CNC device 200A includes a control circuit 201, a ROM 202, a RAM 203, a communication interface 204, a field bus controller 205, and an auxiliary storage device 220. These components are connected to a bus 209.

Control circuit 201 is formed of, for example, at least one integrated circuit. The integrated circuit may be formed of, for example, at least one CPU, at least one GPU, at least one ASIC, at least one FPGA, or a combination thereof.

Control circuit 201 controls the operation of CNC device 200A by executing various programs such as a control program 222. Control program 222 is a program to realize additive processing of workpieces. In response to accepting an instruction to execute control program 222, control circuit 201 reads control program 222 from ROM 202 to RAM 203. RAM 203 functions as a working memory, and temporarily stores various types of data required to execute control program 222.

Communication interface 204 is an interface to realize communication with various devices such as control device 100. As an example, additive processing machine 200 is connected via communication interface 204 to the above-mentioned network NW (see FIG. 1). As a result, additive processing machine 200 exchanges data with control unit 100.

Field bus controller 205 is a communication unit to realize communication with various units connected to field bus. One example of units connected to the field bus are various drive units (for example, servo drivers 241A to 241D, and the like) for realizing additive processing of workpieces.

Auxiliary storage device 220 is a storage medium such as a hard disk or a flash memory. Auxiliary storage device 220 stores control program 222, and the like. The storage location of control program 222 is not limited to auxiliary storage device 220, and control program 222 may be stored in a storage area (for example, a cache memory) of control circuit 201, ROM 202, RAM 203, an external device (for example, a server), and the like.

<H. Functional configuration of additive processing device 10>

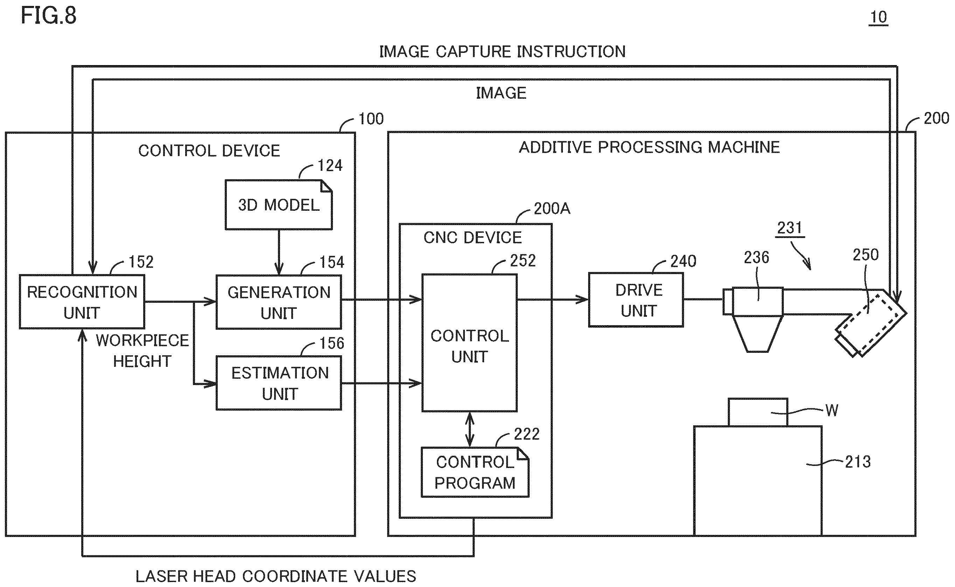

Next, the functional configuration for realizing workpiece modeling processing will be described with reference to FIGS. 8 to 17. FIG. 8 is a diagram for describing the functional configuration of the additive processing device 10.

As described above, the additive processing device 10 includes the control device 100 and the additive processing machine 200. In terms of the functional configuration, the control device 100 includes a recognition unit 152, a generation unit 154 and an estimation unit 156. The additive processing machine 200 includes the above-described CNC device 200A, the above-described rotary table 213, the above-described laser head 231 and the above-described drive unit 240. In terms of the functional configuration, the CNC device 200A includes a control unit 252. Also, the CNC device 200A stores a control program 222 for performing workpiece additive processing.

Hereinafter, functions of the recognition unit 152, functions of the generation unit 154, functions of the estimation unit 156, and functions of the control unit 252 will be described in this order.

Note that the recognition unit 152, the generation unit 154 and the estimation unit 156 are not necessarily required to be implemented in the control device 100. For example, at least one of the recognition unit 152, the generation unit 154 and the estimation unit 156 may be implemented in the CNC device 200A or may be implemented in another device.

Also, the control unit 252 is not necessarily required to be implemented in the CNC device 200A. For example, the control unit 252 may be implemented in the control device 100 or may be implemented in another device.

H1. Recognition unit 152

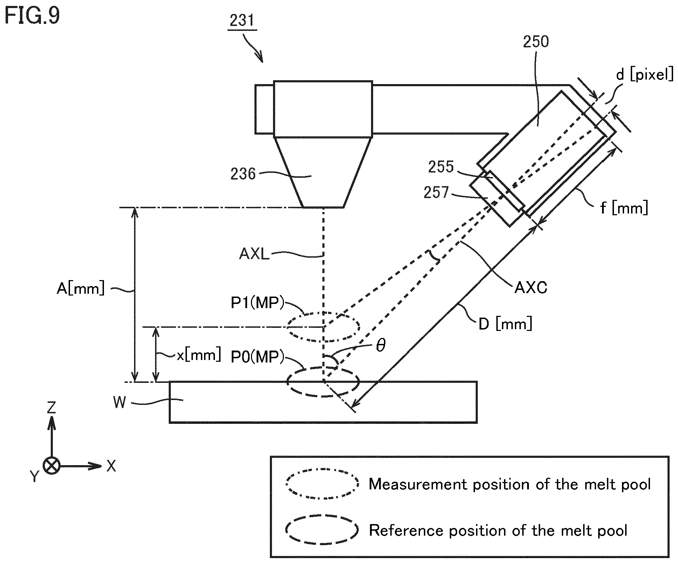

First, functions of the recognition unit 152 shown in FIG. 8 will be described with reference to FIGS. 9 to 12. FIG. 9 is a diagram showing an example of the positional relationship between the laser head 231 of the additive processing machine 200 and the workpiece W.

The recognition unit 152 recognizes the height of the workpiece W in the laminating direction while the laser head 231 is forming the N-th layer of the workpiece W (N is a natural number), that is to say the current workpiece height. The current workpiece height can be recognized using any method.

As one example, the current workpiece height is recognized using a camera 250. The camera 250 may be a CMOS (Complementary Metal Oxide Semiconductor) camera or another type of camera.

The camera 250 is configured to move in conjunction with the laser head 231. Preferably, the camera 250 is provided in the additive processing machine 200 such that an optical axis AXC of the camera 250 intersects an optical axis AXL of the laser head 231. The optical axis AXL of the laser head 231 corresponds to the laser emission direction. The optical axis AXC of the camera 250 corresponds to an axis that connects the optical center of a lens 255 to the center of the image plane of the camera 250.

The lens 255 of the camera 250 includes a welding light-shielding plate 257. In the case of DED modeling, the brightness of the melt pool is very high, and a large amount of spatter occurs. For this reason, the melt pool portion in the captured image tends to have a very high brightness and be overexposed. By providing the lens 255 with the light-shielding plate 257, the brightness of the melt pool portion is lowered, and overexposure can be prevented. Note that instead of the light-shielding plate 257, the lens 255 may be provided with another member capable of reducing the amount of light.

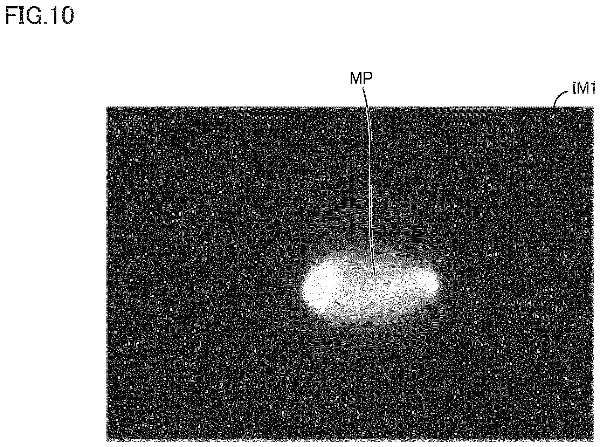

The recognition unit 152 acquires an image of the melt pool MP from the camera 250 while the laser head 231 is forming the N-th layer (N is a natural number) of the workpiece W. FIG. 10 is a diagram showing an example of an image IM1 obtained from the camera 250. In the example in FIG. 10, the melt pool MP appears in the image IM1.

The image IM1 is acquired at any time while the laser head 231 is forming the N-th layer of the workpiece W. For example, the recognition unit 152 periodically acquires the coordinate values (X, Y, Z) of the laser head 231 from the additive processing machine 200, and when the coordinate values reach predetermined coordinate values, an image capture instruction is output to the camera 250. The predetermined coordinate values are set for each layer. Upon receiving the image capture instruction, the camera 250 captures an image of the melt pool MP on the workpiece surface, and transmits the image IM1 to the recognition unit 152.

Communication between the recognition unit 152 and the camera 250 may be realized by wired or wireless communication. As one example, the camera 250 includes a communication interface such as USB (Universal Serial Bus) 2.0, and the image IM1 is sent to the recognition unit 152 via that communication interface. The image IM1 may be a still image or a moving image.

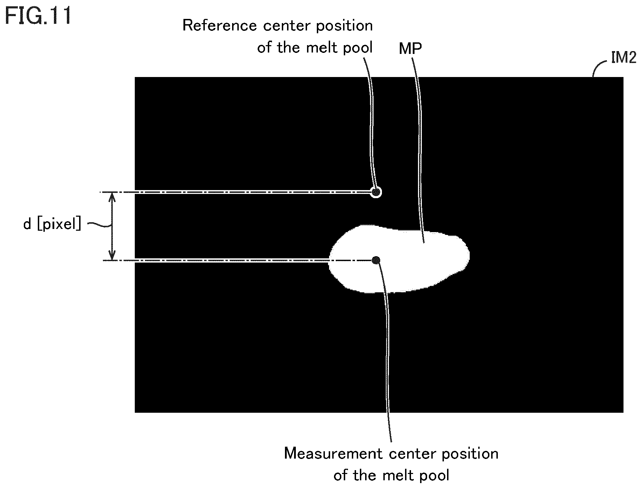

The recognition unit 152 generates an image IM2 shown in FIG. 11 by performing binarization processing on the image IM1. FIG. 11 is a diagram showing an example of the image IM2 generated from the image IM1.

If the image IM1 is a color image, the recognition unit 152 binarizes the RGB values of the pixels in the image IM1. At this time, the recognition unit 152 assigns "0" (black) to pixels whose RGB values are greater than or equal to a predetermined threshold value (e.g., 100), and assigns "255" (white) to the other pixels. This threshold value is determined in advance in accordance with the melting point temperature of the melt pool. In this way, the recognition unit 152 generates the image IM2 from the image IM1.

Next, the recognition unit 152 specifies the position of the powder material melt pool MP in the image IM2, and recognizes the current workpiece height based on the specified position. More specifically, in this processing, the recognition unit 152 first calculates the distance between the laser head 231 and the melt pool (hereinafter, also referred to as the "SOD") based on Expression 1 shown hereinafter.

As shown in FIG. 9, in the case where the camera 250 captures an image of the melt pool MP from an angle, the position of the melt pool MP in the image IM2 is different between when the melt pool MP is at an ideal position P0 and when the melt pool MP is at a position P1 that is shifted by "x" mm from the position P0. In view of this, the recognition unit 152 calculates the SOD based on Expression 1 below, which employs triangulation.

$$x = (d \cdot D)/(f \cdot \sin\theta + d \cdot \cos\theta) \qquad \text{Exp. 1}$$

In Expression 1, "d" represents the distance from the center of the image sensor of the camera 250 to the image of the melt pool MP formed on the image sensor of the camera 250. In other words, the distance "d" corresponds to the distance between a predetermined reference point in the image and the position of the melt pool in the image. Here, "d" is expressed in units of "pixel".

Also, "D" indicates the distance between a reference position P0 of the melt pool MP and the lens 255 of the camera 250. Here, "D" is expressed in units of "mm". Also, "D" is a known value and has been determined in advance. For example, "D" is 70 mm.

Also, "f" represents the distance between the camera lens 255 of the camera 250 and the image sensor of the camera 250. Here, "f" is expressed in units of "mm". Also, "f" is a known value and has been determined in advance. For example, "f" is 8.8 mm.

Also, "$\theta$" represents the angle formed by the optical axis AXC of the camera 250 and the optical axis AXL of the laser head 231. Here, "$\theta$" is expressed in units of "°". Also, "$\theta$" is a known value and has been determined in advance. For example, "$\theta$" is 60°.

The distance "d" is calculated based on image IM2, for example. More specifically, first, the recognition unit 152 searches for an elliptical shape in the predetermined image IM2. Any of various image processing algorithms such as Hough transform can be used as the elliptical shape search algorithm. Subsequently, the recognition unit 152 recognizes the center point of the elliptical shape as the position of the melt pool, and calculates the distance between that position and the predetermined reference position as "d".

The recognition unit 152 specifies the distance "x" by substituting the calculated distance "d" into Expression 1. Next, the recognition unit 152 calculates the SOD at the current time (hereinafter, also referred to as the "current SOD") by subtracting the distance "x" from an ideal SOD "A mm". The ideal SOD has been set in advance. For example, the ideal SOD is 11 mm.

Subsequently, the recognition unit 152 calculates the current workpiece height by subtracting the current SOD from the Z coordinate of the laser head 231 during formation of the N-th layer. The Z coordinate of the laser head 231 is acquired from the CNC device 200A at the time when the image IM1 is captured, for example.

As described above, the recognition unit 152 specifies the position of the powder material melt pool in the image obtained from the camera 250 while the laser head 231 is forming the N-th layer of the workpiece W, and recognizes the current workpiece height in the laminating direction based on the specified position. The recognized current workpiece height is output to the generation unit 154.

Note that although an example has been described in which the optical axis AXC of the camera 250 is arranged so as to intersect the optical axis AXL of the laser head 231, the camera 250 may be arranged at another position. For example, the camera 250 may be arranged such that the optical axis AXC thereof is parallel with the optical axis AXL of the laser head 231.

Also, although an example has been described in which the camera 250 is configured to move in conjunction with the laser head 231, the camera 250 may be provided separately from the laser head 231. For example, the camera 250 may be provided on the ceiling inside the additive processing machine 200.

Also, although an example has been described in which the current SOD and the current workpiece height are recognized with use of the camera 250, the current SOD and the current workpiece height may be recognized with use of a sensor (e.g., a distance sensor) instead of the camera 250.

Also, although an example has been described in which the current SOD is calculated based on Expression 1, the current SOD may be calculated using a predetermined approximation expression.

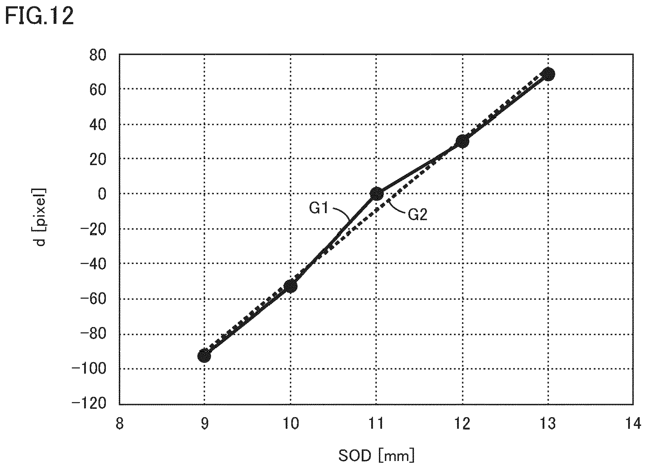

FIG. 12 is a diagram showing the relationship between the distance "d" shown in FIG. 11 and the SOD. The horizontal axis in the graph shown in FIG. 12 represents the current SOD. The vertical axis in the graph shown in FIG. 12 represents the above-described distance "d".

A graph line G1 shown in FIG. 12 indicates actual measured values. These actual measured values were measured under the conditions that "f" is "8.8 mm", the ideal SOD is "11 mm", "D" is "70 mm", and "$\theta$" is "60°", and the relationship between the current SOD and "d" was measured accordingly. The current SOD was changed from 9 mm to 13 mm in increments of 1 mm.

The graph line G1 can be approximated by a straight line with a coefficient of determination of 0.99 (graph line G2). In the example in FIG. 12, the graph line G2 is expressed by "$y=40.2x-451.4$". Here, "x" corresponds to the "current SOD" described above, and "y" corresponds to "d" described above. The recognition unit 152 can calculate the current SOD by substituting "d" in the approximation expression of the graph line G2.

In this way, the relationship between the current SOD and "d" can be specified in advance, and thus the current SOD may be calculated based on a predetermined approximation expression.

H2. Generation unit 154

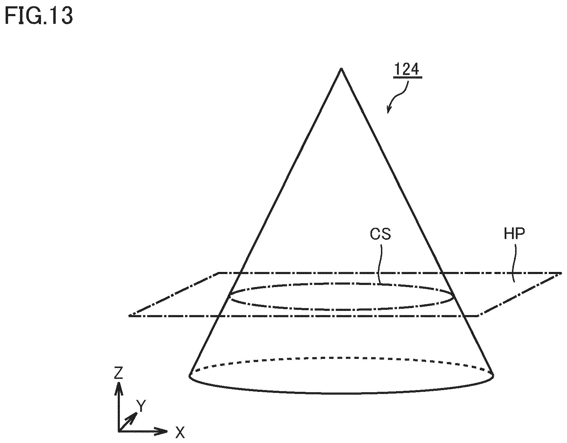

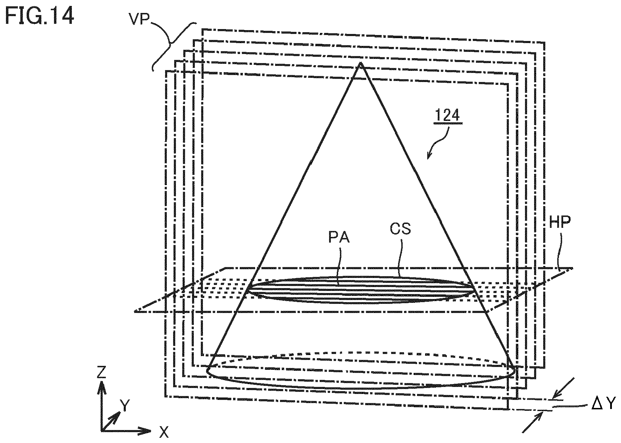

Next, functions the generation unit 154 shown in FIG. 8 will be described with reference to FIGS. 13 and 14. The generation unit 154 generates a drive path for the laser head 231 to form the N+1-th layer of the workpiece based on the current workpiece height recognized by the recognition unit 152.

The drive path is generated using a three-dimensional model 124 shown in FIG. 13, for example. FIG. 13 is a diagram for describing a method for generating a drive path for the laser head 231.

The three-dimensional model 124 is CAD (Computer Aided Design) data that expresses the completed shape of the workpiece. The three-dimensional model 124 may be stored in the control device 100 or may be stored in the CNC device 200A.

The three-dimensional model 124 may be in any data format. For example, the three-dimensional model 124 may be a wire frame model in which the three-dimensional shape is defined by a combination of points and lines, a surface model in which the three-dimensional shape is defined by a combination of faces, a spatial grid model in which information indicating the presence/absence and type of an object is associated with coordinate values in three dimensions, or another three-dimensional model that enables identifying three-dimensional coordinate values at which the powder material is to be discharged.

More specifically, in this processing, first, the generation unit 154 estimates a workpiece height for the N+1-th layer based on the current workpiece height for the N-th layer recognized by the recognition unit 152. For example, the generation unit 154 adds a predetermined value to the recognized current workpiece height in the N-th layer, and estimates the result of such addition as the workpiece height for the N+1-th layer. This predetermined value is determined in advance in accordance with the thickness of one layer that can be formed at the ideal SOD. Alternatively, the predetermined value may be calculated by subtracting the workpiece height in the N-1-th layer from the current workpiece height in the N-th layer.

Next, the generation unit 154 virtually sets a plane HP (first plane) in the three-dimensional model 124. The plane HP is a plane that corresponds to the workpiece height for the N+1-th layer and is perpendicular to the laminating direction. Subsequently, the generation unit 154 generates a drive path based on the shape of an intersection CS between the three-dimensional model 124 and the plane HP. The drive path is defined such that the powder material is discharged within the outline of the intersection CS, and furthermore the focal point of the laser is within the outline.

Note that the drive path may have any pattern as long as the powder material is discharged within the outline of the intersection CS. FIG. 14 is a diagram for describing the drive path generation method in more detail.

Preferably, the generation unit 154 not only virtually sets the plane HP in the three-dimensional model 124, but also virtually sets a plane group VP (second plane group) in the three-dimensional model 124. The plane group VP is a group of planes that are parallel with the laminating direction and are separated by an interval $\Delta Y$. Also, the group of planes in the plane group VP are orthogonal to the plane HP. The generation unit 154 generates a drive path based on the lines of intersection between the three-dimensional model 124, the plane HP, and the plane group VP.

The interval $\Delta Y$ between the planes that make up the plane group VP may be set in advance or may be set automatically. As one example, the interval $\Delta Y$ is set such that beam spots overlap each other by 50% (e.g., 1.5 mm).

In the example in FIG. 14, the lines of intersection between the three-dimensional model 124, the plane HP, and the plane group VP are shown as the drive path PA. In this way, the generation unit 154 defines the drive path PA such that the powder material is discharged on the lines of intersection, and furthermore the focal point of the laser is on the lines of intersection.

Note that although FIG. 14 shows an example of generation of a drive path PA for scanning within the intersection CS, the drive path PA is not limited to such a pattern. As another example, the generation unit 154 may generate a drive path PA for moving in a spiral from the center of the intersection CS. As yet another example, the generation unit 154 may generate a path driven for moving in a spiral from the outer circumference of the intersection CS toward the center of the intersection CS.

Preferably, the pattern of the drive path PA may be stored in a database in advance for each outline shape of the intersection CS. Examples of such shapes defined in the database include "circular" and "non-circular". Here, "circular" is associated with a pattern such as a concentric circle path, a unidirectional path, or a zigzag path. Also, "non-circular" is associated with a unidirectional path or a zigzag path, for example.

The generation unit 154 references the above database and specifies a drive path pattern that corresponds to the outline shape of the intersection CS. Note that if there are a plurality of intersections CS in the modeling plane, a drive path pattern is selected in accordance with the shape of the outline of each of the intersections CS.

H3. Estimation unit 156

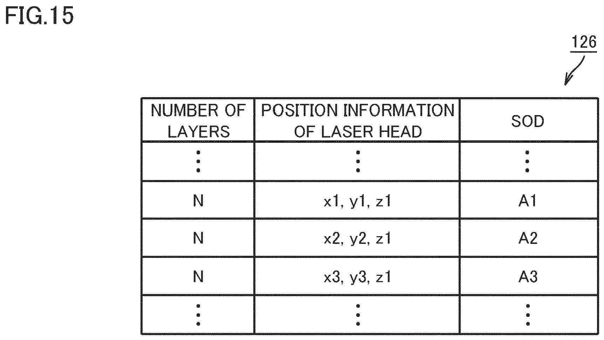

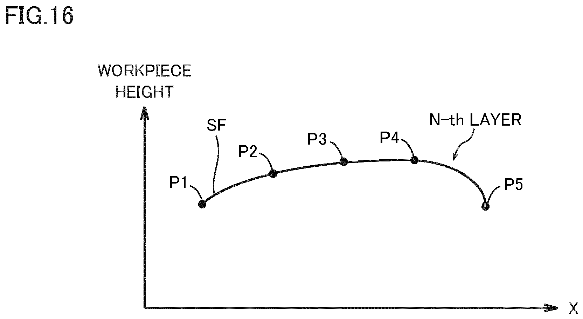

Next, functions of the estimation unit 156 shown in FIG. 8 will be described with reference to FIGS. 15 and 16.

The estimation unit 156 estimates the surface shape of the N-th layer of the workpiece based on the current workpiece heights at multiple locations, which were recognized by the recognition unit 152. For example, the surface shape is estimated based on recognition information 126 shown in FIG. 15.

FIG. 15 is a diagram showing an example of the recognition information 126. In the recognition information 126, the number of layers of the workpiece at the time when the camera 250 captured an image of the surface of the workpiece, position information (e.g., coordinate values) of the laser head 231 at the same time, and the current SOD at the same time are associated with each other. In this way, in the recognition information 126, position information of the laser head 231 at the time when the image capture instruction was output to the camera 250 is associated with the current SOD recognized from the image obtained in accordance with the same image capture instruction. As one example, the image capture instruction is output each time the laser head 231 moves a predetermined distance (e.g., about 1 to 10 mm) on the horizontal plane.

When estimating the surface shape of the N-th layer of the workpiece, the estimation unit 156 references the recognition information 126 and acquires the position information of the laser head 231 and the current SOD that are associated with the N-th layer. Next, the estimation unit 156 subtracts the current SOD from Z coordinates in the position information of the laser head 231 to calculate the positions (coordinate values) of respective locations on the N-th layer of the workpiece.

FIG. 16 is a diagram showing an example of the locations P1 to P5 on the N-th layer whose positions have been calculated. The estimation unit 156 interpolates the current workpiece height between the locations P1 to P5 based on the current workpiece heights at the locations P1 to P5 on the N-th layer. At this time, the estimation unit 156 interpolates the workpiece height by using the workpiece heights at two or three adjacent points.

Any interpolation algorithm can be adopted to perform interpolation. Examples of interpolation algorithms include linear interpolation, cubic spline interpolation, Lagrangian interpolation, gridded interpolation, curvilinear interpolation, and any other algorithm capable of interpolating the current workpiece height between locations.

The estimation unit 156 estimates the surface shape SF of the N-th layer of the workpiece by interpolating the current workpiece height at locations between the locations P1 to P5. The surface shape SF may be represented two-dimensionally or three-dimensionally. The estimated surface shape SF is output to the later-described control unit 252.

Note that in the above description, it is not always necessary to use the workpiece heights at five locations when estimating the surface shape SF. For example, in the case where the workpiece (modeled object) has a two-dimensional shape, such as a wall shape, the surface shape SF can be estimated from at least the workpiece heights at two locations. As another example, in the case where the workpiece (modeled object) has a three-dimensional shape, such as a cylindrical shape, the surface shape SF can be estimated based on at least the workpiece heights at three locations.

H4. Control unit 252

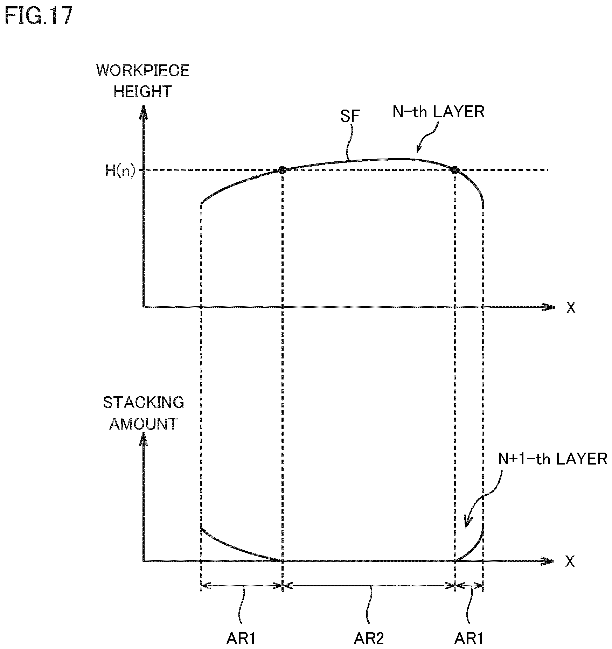

Next, functions of the control unit 252 shown in FIG. 8 will be described with reference to FIG. 17.

The control unit 252 controls the laser head 231 and the drive unit 240 to adjust the driving of the laser head 231, the stacking amount of workpiece layer formed by the laser head 231, and the like. The control processing performed by the control unit 252 includes "normal lamination processing" and "adjustment lamination processing".

Here, "normal lamination processing" refers to lamination processing in which a workpiece is modeled based on drive paths successively generated by the generation unit 154 described above. On the other hand, the adjustment lamination processing refers to lamination processing for adjusting the workpiece height so as to be more uniform.

The adjustment lamination processing can be executed at any timing. For example, the control unit 252 executes adjustment lamination processing each time a predetermined number of layers have been formed in normal lamination processing. The predetermined number may be 1 or 2 or more. Accordingly, the workpiece height is adjusted periodically.

As another example, the control unit 252 executes adjustment lamination processing after the modeling of the workpiece by normal lamination processing is complete. Here, "completion" means a state in which at least a portion of the workpiece has reached a target height. In this case, the workpiece height is adjusted only one time, at the end.

As still another example, if at least one SOD recognized during the modeling of the N-th layer exceeds a predetermined threshold value, the control unit 252 executes adjustment lamination processing after the modeling of the N-th layer is complete. The predetermined threshold value may be set in advance, or set as desired by the user.

Normal lamination processing and adjustment lamination processing will be described below in this order.

(a) Normal lamination processing

First, normal lamination processing will be described.

In normal lamination processing, the control unit 252 controls the laser head 231 and the drive unit 240 based on drive paths successively generated by the generation unit 154.

More specifically, in this processing, a control program 222 in which a sequence number is assigned to each control pattern is prepared in the CNC device 200A. Each control pattern includes R variables that can be specified externally. For example, at least one of the following is defined as an R variable: a movement coordinate value for the laser nozzle 236 (e.g., a movement point defined by rapid movement G00, linear interpolation G01, or arc interpolation G02/G03), a movement speed of the laser nozzle 236 (e.g., the feed rate), and the turning on/off of the laser.

The generation unit 154 described above specifies a sequence number and transmits R variables that correspond to the drive path PA to the CNC device 200A. The control unit 252 of the CNC device 200A successively generates the control program 222 based on the sequence number and the R variables received from the generation unit 154.

Accordingly, during formation of the N-th layer, modeling path points for the N+1-th layer are calculated, R variables are transmitted from the control device 100 to the CNC device 200A, and the modeling program for the N+1-th layer is generated in the CNC device 200A.

(b) Adjustment lamination processing

Next, adjustment lamination processing will be described with reference to FIG. 17. FIG. 17 is a diagram schematically showing the process of adjustment lamination processing.

In adjustment lamination processing, based on the surface shape SF estimated by the estimation unit 156 described above, the control unit 252 recognizes a low location AR1, which is a location on the workpiece where the current workpiece height has not reached a predetermined target height H(n). Also, based on the surface shape SF estimated by the estimation unit 156, the control unit 252 recognizes a high location AR2, which is a location on the workpiece where the current workpiece height has reached the predetermined target height H(n).

The target height H(n) is set in advance, for example. For example, the target height H(n) can be changed according to the current number of layers making up the workpiece. In this case, the target height H(n) is calculated by multiplying the current number of layers "n" by the height per layer. The height per layer is set in advance.

The control unit 252 controls the stacking amount when forming the N+1-th layer of the workpiece such that the stacking amount at the low location AR1 is greater than the stacking amount at the high location AR2. Preferably, the control unit 252 performs control such that lamination is not performed at the high location AR2 when forming the N+1-th layer of the workpiece. As a result, the control unit 252 can perform control such that lamination is performed at locations on the workpiece W where the height is insufficient, and thus the height of the workpiece W can be made uniform.

Preferably, the stacking amount at the low location AR1 is changed according to the amount of height that is insufficient. For example, the stacking amount at the low location AR1 is determined according to a value obtained by subtracting the target height H(n) from the workpiece height at the corresponding location. Accordingly, the farther the current workpiece height at a certain location is from the target height H(n), the control unit 252 can set a higher stacking amount for use in modeling of the N+1-th layer.

Various methods can be adopted in order to adjust the stacking amount. For example, the stacking amount can be changed by changing the amount of powder material that is supplied. In this case, the control unit 252 controls the laser head 231 such that a larger amount of powder material is discharged at a location where the stacking amount needs to be increased. In other words, the control unit 252 controls the laser head 231 such that only a small amount of powder material is discharged at a location where the stacking amount needs to be reduced.

As another example, the stacking amount can be changed by changing the movement speed of the laser head 231. In this case, the control unit 252 controls the drive unit 240 such that the laser head 231 is driven at a lower speed at a location where the stacking amount needs to be increased. In other words, the control unit 252 controls the drive unit 240 so as to drive the laser head 231 at a higher speed at a location where the stacking amount needs to be reduced.

As still another example, the stacking amount can be changed by changing the number of layers in the workpiece. In this case, the control unit 252 increases the number of passes of the laser head 231 at a location where the stacking amount needs to be increased. In other words, the control unit 252 reduces the number of passes of the laser head 231 at a location where the stacking amount needs to be reduced.

As yet another example, the stacking amount can be changed by changing the output of the laser head 231.

As still another example, the stacking amount can be changed by changing a combination of the amount of powder material that is discharged, the movement speed of the laser head 231, the number of passes of the laser head 231 at each location, and the output of the laser head 231.

<I. Control flow>

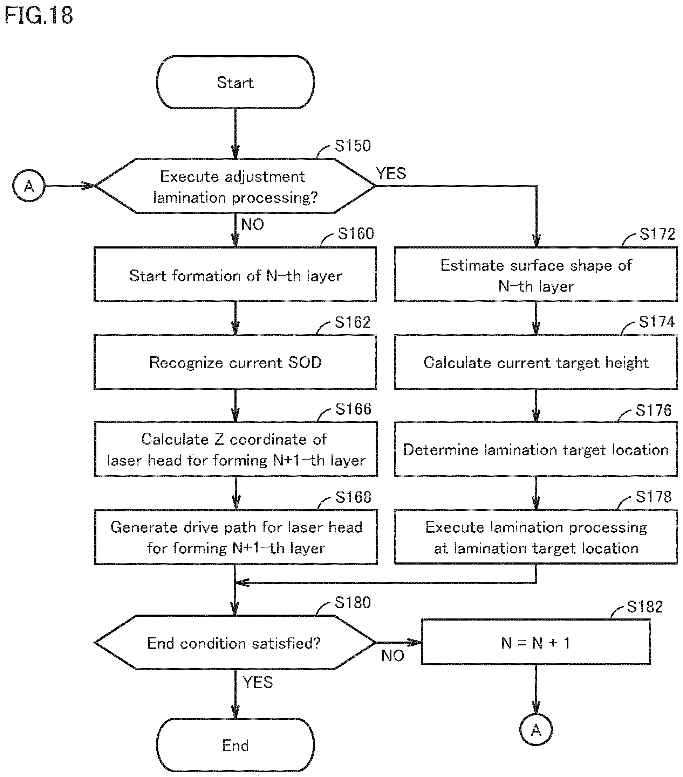

The following describes a control flow in the additive processing device 10 with reference to FIG. 18. FIG. 18 is a flowchart showing the flow of modeling processing performed by the additive processing device 10.

The processing shown in FIG. 18 may be executed by the control circuit 101 of the control device 100, or may be executed by the CNC device 200A.

In step S150, the additive processing device 10 determines whether or not to execute adjustment lamination processing. Adjustment lamination processing is executed if a predetermined condition is satisfied. For example, the predetermined condition is satisfied if the current number of layers has reached a predetermined number. As another example, the predetermined condition is satisfied if a portion of the workpiece has reached a predetermined target height.

In the case of determining to execute adjustment lamination processing (YES in step S150), the additive processing device 10 switches the control to step S172. If otherwise (NO in step S150), the additive processing device 10 switches the control to step S160.

In step S160, the additive processing device 10 starts formation of the N-th layer of the workpiece W. Here, "N" is a natural number. The initial value of "N" is "1".

When forming the first layer of the workpiece (i.e., N=1), the additive processing device 10 drives the laser head 231 in accordance with a control program prepared in advance. On the other hand, when forming the second and subsequent layers of the workpiece (i.e.,

N≥2), the additive processing device 10 drives the laser head 231 in accordance with the output result of the processing shown in steps S166 and S168 described later.

In step S162, the additive processing device 10 functions as the recognition unit 152 (see FIG. 8) described above, and outputs an image capture instruction to the camera 250. At the same timing, the additive processing device 10 acquires position information of the laser head 231 from the CNC device 200A and stores the position information.

The camera 250 captures an image of the melt pool on the surface of the workpiece based on receiving an image capture instruction from the additive processing device 10. The additive processing device 10 recognizes the current SOD based on the above-described image IM1 obtained from the camera 250. A method for recognizing the current SOD has been described above, and thus will not be described again. The recognized current SOD is written in the recognition information 126 described above, in association with the position information of the laser head 231.

The additive processing device 10 executes the processing of step S162 multiple times while driving the laser head 231, and recognizes the current SOD at multiple locations on the workpiece surface in the N-th layer.

In step S166, the additive processing device 10 functions as the generation unit 154 (see FIG. 8) described above, and specifies a reference SOD based on the current SODs that were recognized in step S162. The reference SOD may be one of the recognized current SODs, or may be the average value of the recognized current SODs. The additive processing device 10 calculates Z coordinates for the laser head 231 when forming the N+1-th layer of the workpiece based on the calculated reference SOD. At this time, the Z coordinates are calculated such that the reference SOD at the time of modeling is always constant for each layer. Note that in actual modeling, the reference SOD does not need to be strictly constant, and need only be within a predetermined range based on the ideal SOD.

In step S168, the additive processing device 10 functions as the generation unit 154 described above, and calculates a drive path for the laser head 231 when forming the N+1-th layer of the workpiece. A method for generating a drive path has been described above, and thus will not be described again.

In step S172, the additive processing device 10 functions as the estimation unit 156 (see FIG. 8) described above, and references the recognition information 126 in order to estimate the surface shape of the N-th layer of the workpiece. A method for estimating the surface shape has been described above, and thus will not be described again.

In step S174, the additive processing device 10 calculates the current target height based on the current number of layers in the workpiece. The current target height is calculated by multiplying the current number of layers "N" by the height per layer, for example.

In step S176, the additive processing device 10 specifies a location on the workpiece where the current workpiece height has not reached the target height, based on the surface shape estimated in step S172 and the target height calculated in step S174, and determines the specified location to be a lamination target location.

In step S178, the additive processing device 10 executes lamination processing at the lamination target location determined in step S176. Note that the drive pattern of the laser head 231 during execution of the processing shown in step S178 may be any drive pattern as long as the path allows the powder material to be discharged at the lamination target location.

In step S180, the additive processing device 10 determines whether or not a predetermined end condition is satisfied. The end condition is satisfied if the workpiece height has reached the target height at some or all of the measurement locations, for example. If the additive processing device 10 determines that the predetermined end condition is satisfied (YES in step S180), the processing shown in FIG. 18 is ended. If otherwise (NO in step S180), the additive processing device 10 switches the control to step S182.

In step S182, the additive processing device 10 increments "N". In other words, the additive processing device 10 adds 1 to "N". Subsequently, the additive processing device 10 returns the processing to step S150.

<J. Experiment results>

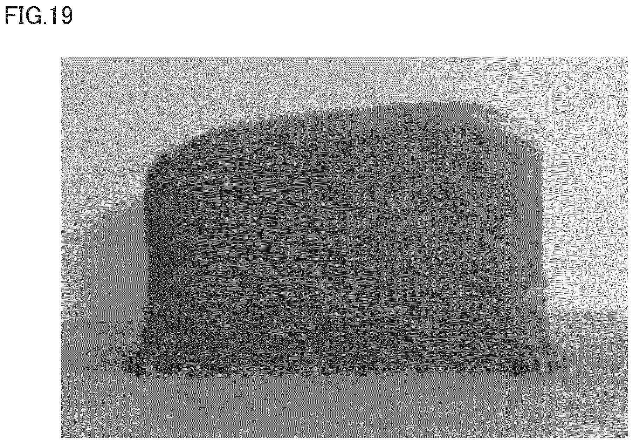

Through experimentation, the inventors confirmed the effectiveness of the modeling processing according to the above-described embodiment. The results of the experiment will be described below with reference to FIGS. 19 to 21.

For convenience in the description, in the following, "proposed technique" refers to a modeling technique according to the above-described embodiment, which employs a combination of the above-described normal lamination processing and the above-described adjustment lamination processing, and "related technique" refers to a modeling technique that employs the above-described normal lamination processing. In this experiment, the inventors conducted an experiment to compare the proposed technique and the related technique by forming wall-shaped workpieces.

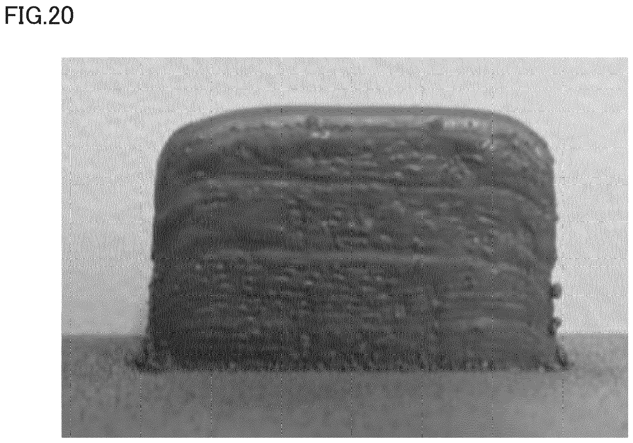

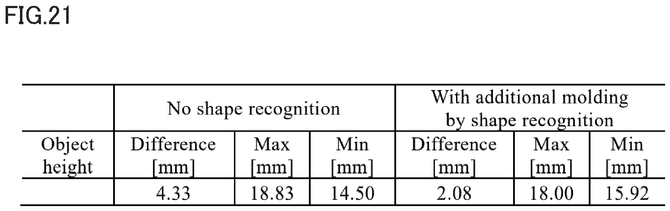

FIG. 19 is a diagram showing a workpiece formed using the related technique. FIG. 20 is a diagram showing a workpiece formed using the proposed technique. FIG. 21 is a diagram showing the results of the experiment.

As shown in FIGS. 19 to 21, when using the related technique, the workpiece height was 18.83 mm at the maximum point and 14.50 mm at the minimum point, and the difference between the maximum point and the minimum point was 4.33 mm. On the other hand, when using the proposed technique, the workpiece height was 18.00 mm at the maximum point and 15.92 mm at the minimum point, and the difference between the maximum point and the minimum point was 2.08 mm. This result indicates that the modeling efficiency of the proposed technique is better than the modeling efficiency of the related technique. Accordingly, the additive processing device 10 can make the workpiece height more uniform when using the proposed technique than when using the related technique. This result indicates that the modeling efficiency of the proposed technique is better than the modeling efficiency of the related technique.

<K. First variation>

Next, the additive processing device 10 according to a first variation will be described.

In FIG. 8 and the like described above, an example has been described in which the control device 100 is provided outside the CNC device 200A, but the control device 100 may be provided inside the CNC device 200A.

<L. Other remarks>

As described above, embodiments of the present embodiment include the following.

Configuration 1

An additive processing device that models a workpiece by melting a supplied powder material and forming layers of the melted powder material, the additive processing device comprising:

 a laser head configured to supply the powder material to the workpiece and irradiate the workpiece with a laser beam;
 a drive unit configured to drive the laser head;
 a recognition unit configured to recognize a height of the workpiece in a laminating direction at a plurality of locations while the laser head is forming a predetermined N-th layer (N being a natural number) of the workpiece;
 an estimation unit configured to estimate a surface shape of the N-th layer of the workpiece based on the recognized heights at the plurality of locations; and
 a control unit configured to control the laser head and the drive unit,
 wherein the control unit recognizes, based on the estimated surface shape, a low location at which the height of the workpiece in the laminating direction is lower than at another location, and sets a stacking amount higher at the low location than at the other location in modeling of a N+1-th layer.

Configuration 2

The additive processing device according to configuration 1,
wherein based on the surface shape of the N-th layer of the workpiece, the control unit recognizes, as the low location, a location at which the height of the workpiece has not reached a predetermined target height.

Configuration 3

The additive processing device according to configuration 2,
wherein based on the surface shape of the N-th layer of the workpiece, the control unit recognizes, as the other location, a location at which the height of the workpiece has reached the predetermined target height.

Configuration 4

The additive processing device according to configuration 3,
wherein the control unit performs control such that stacking is not performed at the other location in formation of the N+1-th layer of the workpiece.

Configuration 5

The additive processing device according to any one of configurations 1 to 4,
wherein the estimation unit recognizes the surface shape of the N-th layer of the workpiece by interpolating a height between adjacent locations among the plurality of locations, based on the heights at the plurality of locations.

Configuration 6

The additive processing device according to any one of configurations 1 to 5,
wherein control of the stacking amount includes control of a supply amount of the powder material.

Configuration 7

The additive processing device according to any one of configurations 1 to 6,
wherein control of the stacking amount includes control of a speed of the laser head.

Configuration 8

The additive processing device according to any one of configurations 1 to 7,
wherein control of the stacking amount includes control of a number of layers in the workpiece.

Configuration 9

A control method for an additive processing device that models a workpiece by melting a supplied powder material and forming layers of the melted powder material,

the additive processing device including:

a laser head configured to supply the powder material to the workpiece and irradiate the workpiece with a laser beam; and
a drive unit configured to drive the laser head,

the control method comprising the steps of:

recognizing a height of the workpiece in a laminating direction at a plurality of locations while the laser head is forming a predetermined N-th layer (N being a natural number) of the workpiece;
estimating a surface shape of the N-th layer of the workpiece based on the recognized heights at the plurality of locations; and
controlling the laser head and the drive unit, wherein the controlling includes recognizing, based on the estimated surface shape, a low location at which the height of the workpiece in the laminating direction is lower than at another location, and setting a stacking amount higher at the low location than at the other location in modeling of a N+1-th layer.

Configuration 10

A control program for an additive processing device that models a workpiece by melting a supplied powder material and forming layers of the melted powder material,

the additive processing device including:

a laser head configured to supply the powder material to the workpiece and irradiate the workpiece with a laser beam; and
a drive unit configured to drive the laser head,

the control program causing the additive processing device to execute:

recognizing a height of the workpiece in a laminating direction at a plurality of locations while the laser head is forming a predetermined N-th layer (N being a natural number) of the workpiece;
estimating a surface shape of the N-th layer of the workpiece based on the recognized heights at the plurality of locations; and
controlling the laser head and the drive unit, wherein the controlling includes recognizing, based on the estimated surface shape, a low location at which the height of the workpiece in the laminating direction is lower than at another location, and setting a stacking amount higher at the low location than at the other location in modeling of a N+1-th layer.

The embodiment disclosed this time is an example in all respects and should be considered to be not restrictive. The scope of the present invention is defined not by the description above but by the claims, and it is intended to include meanings equivalent to the claims and all modifications within the scope.

**Claims**

1.    An additive processing device that models a workpiece by melting a supplied powder material and forming layers of the melted powder material, the additive processing device comprising:

a laser head configured to supply the powder material to the workpiece and irradiate the workpiece with a laser beam;
a drive unit configured to drive the laser head;
a recognition unit configured to recognize a height of the workpiece in a laminating direction at a plurality of locations while the laser head is forming a predetermined N-th layer (N being a natural number) of the workpiece;
an estimation unit configured to estimate a surface shape of the N-th layer of the workpiece based on the recognized heights at the plurality of locations; and
a control unit configured to control the laser head and the drive unit,
wherein the control unit recognizes, based on the estimated surface shape, a low location at which the height of the workpiece in the laminating direction is lower than at another location, and sets a stacking amount higher at the low location than at the other location in modeling of a N+1-th layer.

2.    The additive processing device according to claim 1, wherein based on the surface shape of the N-th layer of the workpiece, the control unit recognizes, as the low location, a location at which the height of the workpiece has not reached a predetermined target height.

3.    The additive processing device according to claim 2, wherein based on the surface shape of the N-th layer of the workpiece, the control unit recognizes, as the other location, a location at which the height of the workpiece has reached the predetermined target height.

4. The additive processing device according to claim 3, wherein the control unit performs control such that stacking is not performed at the other location in formation of the N+1-th layer of the workpiece.

5. The additive processing device according to any one of claims 1 to 4, wherein the estimation unit recognizes the surface shape of the N-th layer of the workpiece by interpolating a height between adjacent locations among the plurality of locations, based on the heights at the plurality of locations.

6. The additive processing device according to any one of claims 1 to 5, wherein control of the stacking amount includes control of a supply amount of the powder material.

7. The additive processing device according to any one of claims 1 to 6, wherein control of the stacking amount includes control of a speed of the laser head.

8. The additive processing device according to any one of claims 1 to 7, wherein control of the stacking amount includes control of a number of layers in the workpiece.

9. A control method for an additive processing device that models a workpiece by melting a supplied powder material and forming layers of the melted powder material,

the additive processing device including:

a laser head configured to supply the powder material to the workpiece and irradiate the workpiece with a laser beam; and a drive unit configured to drive the laser head,

the control method comprising the steps of:

recognizing a height of the workpiece in a laminating direction at a plurality of locations while the laser head is forming a predetermined N-th layer (N being a natural number) of the workpiece; estimating a surface shape of the N-th layer of the workpiece based on the recognized heights at the plurality of locations; and controlling the laser head and the drive unit, wherein the controlling includes recognizing, based on the estimated surface shape, a low location at which the height of the workpiece in the laminating direction is lower than at another location, and setting a stacking amount higher at the low location than at the other location in modeling of a N+1-th layer.

10. A control program for an additive processing device that models a workpiece by melting a supplied powder material and forming layers of the melted powder material,

the additive processing device including:

a laser head configured to supply the powder material to the workpiece and irradiate the workpiece with a laser beam; and a drive unit configured to drive the laser head,

the control program causing the additive processing device to execute:

recognizing a height of the workpiece in a laminating direction at a plurality of locations while the laser head is forming a predetermined N-th layer (N being a natural number) of the workpiece; estimating a surface shape of the N-th layer of the workpiece based on the recognized heights at the plurality of locations; and controlling the laser head and the drive unit, wherein the controlling includes recognizing, based on the estimated surface shape, a low location at which the height of the workpiece in the laminating direction is lower than at another location, and setting a stacking amount higher at the low location than at the other location in modeling of a N+1-th layer.

FIG.1

<u>10</u>

┌─────────────┐ 100          ┌─────────────────┐ 200
│  CONTROL    │       NW     │    ADDITIVE     │
│  DEVICE     │──────────────│  PROCESSING     │
│             │              │    MACHINE      │
│             │─────────────▶│                 │
└─────────────┘  CONTROL     └─────────────────┘
                 COMMAND

FIG.2

200

FIG.3

FIG.4

FIG.5

FIG.6

FIG.7

NETWORK NW

# FIG.8

IMAGE CAPTURE INSTRUCTION

IMAGE

CONTROL DEVICE 100

3D MODEL 124

RECOGNITION UNIT 152

GENERATION UNIT 154

WORKPIECE HEIGHT

ESTIMATION UNIT 156

ADDITIVE PROCESSING MACHINE 200

CNC DEVICE 200A

CONTROL UNIT 252

CONTROL PROGRAM 222

DRIVE UNIT 240

231

236

250

W

213

LASER HEAD COORDINATE VALUES

EP 4 374 991 A1

FIG.9

| | Measurement position of the melt pool |
| --- | --- |
| | Reference position of the melt pool |

FIG.10

FIG.11

Reference center position
of the melt pool    MP

IM2

d [pixel]

Measurement center position
of the melt pool

FIG.12

FIG.13

FIG.14

FIG.15

126

| NUMBER OF LAYERS | POSITION INFORMATION OF LASER HEAD | SOD |
|---|---|---|
| ⋮ | ⋮ | ⋮ |
| N | x1, y1, z1 | A1 |
| N | x2, y2, z1 | A2 |
| N | x3, y3, z1 | A3 |
| ⋮ | ⋮ | ⋮ |

FIG.16

WORKPIECE
HEIGHT

FIG.17

FIG.18

```
                    ┌─────────────────┐
                    │      Start      │
                    └─────────────────┘
                             │
                             ▼                          S150
         ┌──────────────────────────────────────┐
    A ──▶│         Execute adjustment            │──── YES ────┐
         │        lamination processing?         │             │
         └──────────────────────────────────────┘             │
                             │ NO                              │
                       S160  ▼                           S172  ▼
         ┌──────────────────────────────┐    ┌──────────────────────────────┐
         │   Start formation of N−th layer │  │     Estimate surface shape of │
         │                                 │  │           N−th layer          │
         └──────────────────────────────┘    └──────────────────────────────┘
                       S162  ▼                           S174  ▼
         ┌──────────────────────────────┐    ┌──────────────────────────────┐
         │      Recognize current SOD    │    │   Calculate current target height │
         └──────────────────────────────┘    └──────────────────────────────┘
                       S166  ▼                           S176  ▼
         ┌──────────────────────────────┐    ┌──────────────────────────────┐
         │     Calculate Z coordinate of │    │ Determine lamination target location │
         │ laser head for forming N+1−th layer │ │                              │
         └──────────────────────────────┘    └──────────────────────────────┘
                       S168  ▼                           S178  ▼
         ┌──────────────────────────────┐    ┌──────────────────────────────┐
         │ Generate drive path for laser head │ │   Execute lamination processing │
         │    for forming N+1−th layer   │    │     at lamination target location │
         └──────────────────────────────┘    └──────────────────────────────┘
                             │◀───────────────────────────────┘
                       S180  ▼                                         S182
         ┌──────────────────────────────┐         ┌──────────────────────────────┐
         │     End condition satisfied?  │── NO ──▶│          N = N + 1           │
         └──────────────────────────────┘         └──────────────────────────────┘
                             │ YES                              │
                             ▼                                  ▼
                    ┌─────────────────┐                       ( A )
                    │       End       │
                    └─────────────────┘
```

FIG.19

FIG.20

FIG.21

| | No shape recognition | | | With additional molding by shape recognition | | |
|---|---|---|---|---|---|---|
| Object height | Difference [mm] | Max [mm] | Min [mm] | Difference [mm] | Max [mm] | Min [mm] |
| | 4.33 | 18.83 | 14.50 | 2.08 | 18.00 | 15.92 |

Europäisches
Patentamt

European
Patent Office

Office européen
des brevets

## EUROPEAN SEARCH REPORT

**Application Number**

EP 23 20 9045

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/018853 A1 (NIKON CORP [JP]) 27 January 2022 (2022-01-27) * abstract; figures * | 1-10 | INV. B22F10/25 B22F10/38 |
| X,P | -& EP 4 186 616 A1 (NIKON CORP [JP]) 31 May 2023 (2023-05-31) * paragraphs [0004] - [0016], [0018], [0023] - [0027], [0034] - [0054], [0057] - [0058], [0063] - [0078]; claims; figures * | 1-10 | B22F12/90 B23K26/02 B23K26/08 B23K26/144 B23K26/342 B33Y30/00 B33Y50/02 |
| X | US 2022/324057 A1 (TAKUSHIMA SHIGERU [JP] ET AL) 13 October 2022 (2022-10-13) * paragraphs [0001], [0004], [0006] - [0009], [0050] - [0069], [0072] - [0079], [0117] - [0133]; claims; figures * | 1-10 | |
| X | WO 2022/149426 A1 (KOBE STEEL LTD [JP]) 14 July 2022 (2022-07-14) * abstract * | 1-10 | |
| X,P | -& EP 4 245 450 A1 (KOBE STEEL LTD [JP]) 20 September 2023 (2023-09-20) * paragraphs [0001], [0005] - [0009], [0012] - [0013], [0021] - [0023], [0026] - [0051], [0056] - [0057], [0060] - [0061]; claims; figures * | 1-10 | TECHNICAL FIELDS SEARCHED (IPC) B22F B23K B33Y |
| A | US 2021/245252 A1 (KAYASHIMA SHUN [JP] ET AL) 12 August 2021 (2021-08-12) * the whole document * | 1-10 | |

The present search report has been drawn up for all claims

| Place of search | Date of completion of the search | Examiner |
|---|---|---|
| The Hague | 23 April 2024 | Ceulemans, Judy |

EPO FORM 1503 03.82 (P04C01)

## ANNEX TO THE EUROPEAN SEARCH REPORT
## ON EUROPEAN PATENT APPLICATION NO.

EP 23 20 9045

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2024

| Patent document cited in search report | | | Publication date | Patent family member(s) | | | Publication date |
|---|---|---|---|---|---|---|---|
| WO 2022018853 | A1 | | 27-01-2022 | CN | 116113512 | A | 12-05-2023 |
| | | | | EP | 4186616 | A1 | 31-05-2023 |
| | | | | JP | WO2022018853 | A1 | 27-01-2022 |
| | | | | US | 2023264266 | A1 | 24-08-2023 |
| | | | | WO | 2022018853 | A1 | 27-01-2022 |
| EP 4186616 | A1 | | 31-05-2023 | CN | 116113512 | A | 12-05-2023 |
| | | | | EP | 4186616 | A1 | 31-05-2023 |
| | | | | JP | WO2022018853 | A1 | 27-01-2022 |
| | | | | US | 2023264266 | A1 | 24-08-2023 |
| | | | | WO | 2022018853 | A1 | 27-01-2022 |
| US 2022324057 | A1 | | 13-10-2022 | CN | 114222642 | A | 22-03-2022 |
| | | | | DE | 112019007607 | T5 | 05-05-2022 |
| | | | | JP | 6765569 | B1 | 07-10-2020 |
| | | | | JP | WO2021024431 | A1 | 13-09-2021 |
| | | | | US | 2022324057 | A1 | 13-10-2022 |
| | | | | WO | 2021024431 | A1 | 11-02-2021 |
| WO 2022149426 | A1 | | 14-07-2022 | CN | 116685430 | A | 01-09-2023 |
| | | | | EP | 4245450 | A1 | 20-09-2023 |
| | | | | JP | 2022106172 | A | 19-07-2022 |
| | | | | US | 2024051052 | A1 | 15-02-2024 |
| | | | | WO | 2022149426 | A1 | 14-07-2022 |
| EP 4245450 | A1 | | 20-09-2023 | CN | 116685430 | A | 01-09-2023 |
| | | | | EP | 4245450 | A1 | 20-09-2023 |
| | | | | JP | 2022106172 | A | 19-07-2022 |
| | | | | US | 2024051052 | A1 | 15-02-2024 |
| | | | | WO | 2022149426 | A1 | 14-07-2022 |
| US 2021245252 | A1 | | 12-08-2021 | CN | 112912200 | A | 04-06-2021 |
| | | | | DE | 112018007986 | T5 | 27-05-2021 |
| | | | | JP | 6625275 | B1 | 25-12-2019 |
| | | | | JP | WO2020084673 | A1 | 15-02-2021 |
| | | | | US | 2021245252 | A1 | 12-08-2021 |
| | | | | WO | 2020084673 | A1 | 30-04-2020 |

EPO FORM P0459

For more details about this annex : see Official Journal of the European Patent Office, No. 12/82

**EP 4 374 991 A1**

**Patent documents cited in the description**

- JP 2018008403 A